# EUROPÄISCHE PATENTANMELDUNG

(11) **EP 2 103 849 A1**
(43) Veröffentlichungstag der Anmeldung: **23.09.2009**
(21) Anmeldenummer: 08005132.9
(22) Anmeldetag: 19.03.2008
(51) Int. Cl.: F16J 15/16

(54) **Dichtring**

(71) Anmelder: Carl Freudenberg KG, 69469 Weinheim (DE)
(72) Erfinder: Freitag, Edgar, 34613 Schwalmstadt (DE)

(57) **Zusammenfassung**

Dichtring aus einem elastisch nachgiebigen Dichtungswerkstoff mit einer sich in axialer Richtung erstreckenden Breite (1), wobei die Breite (1) in zumindest einem Umfangsbereich (2) reduziert ist und dieser Umfangsbereich (2) als Sollbruchstelle (3) ausgebildet ist.

## Beschreibung

### Technisches Gebiet

Die Erfindung betrifft einen Dichtring aus einem elastisch nachgiebigen Dichtungswerkstoff mit einer sich in axialer Richtung erstreckenden Breite.

### Stand der Technik

Solche Dichtringe sind allgemein bekannt, wobei sich deren Breite auch nach der Breite des Einbauraums richtet, in den sie eingebaut werden. Manche Maschinen, in die Dichtringe eingebaut werden, reagieren empfindlich auf Druckschwankungen/Druckspritzen, die in den abzudichtenden Räumen auftreten können. Zum Schutz dieser Maschinen ist es bekannt, einen Überlastschutz vorzusehen, um Beschädigungen der Maschinen durch unzulässig große Druckschwankungen/Druckspritzen zu vermeiden. Dieser Überlastschutz ist beispielsweise durch Überdruckventile gebildet oder spezielle gestaltete Einbauräume für den Dichtring, die einen Bypaß zum Druckabbau unerwünscht hoher Überdrücke aufweisen. Ein derartiger Überlastschutz ist jedoch in konstruktiver, fertigungstechnischer und wirtschaftlicher Hinsicht aufwändig, insbesondere dann, wenn die Einbaubäume klein sind.

### Darstellung der Erfindung

Der Erfindung liegt die Aufgabe zu Grunde, einen Dichtring derart weiter zu entwickeln, dass ein maschinenseitiger Überlastschutz zur Vermeidung unerwünscht großer Druckschwankungen/Druckspritzen und daraus resultierender Beschädigungen der Maschine entbehrlich ist. Außerdem soll der Dichtring einen einfachen Aufbau aufweisen und in fertigungstechnischer und wirtschaftlicher Hinsicht einfach und kostengünstig herstellbar sein.

Diese Aufgabe wird erfindungsgemäß durch einen Dichtring mit den Merkmalen von Anspruch 1 gelöst. Auf vorteilhafte Ausgestaltungen nehmen die Unteransprüche Bezug.
In Anspruch 15 ist eine vorteilhafte Verwendung beansprucht.

Zur Lösung der Aufgabe ist ein Dichtring aus einem elastisch nachgiebigen Dichtungswerkstoff vorgesehen, mit einer sich in axialer Richtung erstreckenden Breite, wobei die Breite in zumindest einem Umfangsbereich reduziert ist und dieser Umfangsbereich als Sollbruchstelle ausgebildet ist. Hierbei ist von Vorteil, dass der Überlastschutz im Dichtring selbst angeordnet ist; aufwändiger Konstruktionen in der Maschine, um für die Maschine schädliche Druckschwanicungen/Druckspritzen zu vermeiden, bedarf es daher nicht. Des Weiteren ist von Vorteil, dass auch Maschinen einfach und problemlos mit einem solchen Überlastschutz versehen werden können, die bisher dafür nicht vorgesehen waren. Durch einen einfachen Austausch des bisherigen Dichtrings gegen einen erfindungsgemäßen Dichtring wird der Überlastschutz erreicht.

Die Sollbruchstelle kann als sich in Umfangsrichtung erstreckender Steg ausgebildet sein. Dieser Steg bildet eine Sicherheitsmembran und reißt bei Überschreitung eines vorbestimmten Druck-Grenzwerts, des so genannten Berstdrucks, so dass der unerwünscht hohe Druck durch den Dichtring abblasen kann und dadurch eine Beschädigung/Zerstörung der Maschine, in der der Dichtring eingebaut ist, vermieden wird.

Der Steg kann, in einer Seitenansicht des Dichtrings betrachtet, im Wesentlichen rechteckförmig oder halbkreisförmig ausgebildet seien. Speziell die im Wesentlichen halbkreisförmig ausgebildet Steg weist eine einfache Geometrie auf und ist deshalb einfach und kostengünstig herstellbar.

Der Steg ist bevorzugt axial mittig des Dichtrings angeordnet. Die Funktionsfähigkeit des Stegs bleibt auch dann vollständig erhalten, wenn Fertigungstoleranzen des Dichtrings und/oder seines Einbauraums voll ausgeschöpft werden. Durch die axial mittige Anordnung ist der Steg bei Druckbeaufschlagung in jedem Fall funktionsfähig, da er axial ausweichen und einreißen kann. Das Verhältnis aus der Breite der Dichtbereiche, die in Umfangsrichtung beiderseits an den Steg angrenzen, zur Breite des Stegs beträgt bevorzugt 2 bis 10, weiter bevorzugt 3,5 bis 6. Dichtringe, die die genannten Verhältnisse aufweisen, funktionieren für die meisten Anwendungsfälle ausreichend gut und sind dennoch einfach und kostengünstig herstellbar. Werden demgegenüber Verhältnisse außerhalb der genannten Bereiche realisiert, ist die Sollbruchstelle entweder zu stabil oder zu nachgiebig und damit für viele Anwendungsfälle praktisch nicht geeignet.

Der Steg kann entlang seiner Umfangserstreckung zumindest eine Einkerbung aufweisen, deren Breite im Vergleich zur Breite des umfangsseitig beiderseits angrenzenden Stegs weiter verringert ist. Die Einkerbung definiert eng begrenzt den Bereich, in dem der Steg zum Abbau unerwünscht hohen Drucks reißt. Außerdem kann durch eine entsprechende Dimensionierung der Einkerbung einer geringe Reißfestigkeit erreicht werden, und auch ein vergleichsweise geringer Überdruck im abzudichtenden Raum kann durch einen Riss in der Einkerbung abgebaut werden. Trotz der geringen Reißfestigkeit kann der Dichtring durch die Einkerbung prozesssicher hergestellt werden.

Die Einkerbung kann scharfkantig ausgebildet sein. Die Kerbspannung im Bereich der Einkerbung ist dadurch bereits bei einer vergleichsweise geringen Druckbeaufschlagung vergleichsweise, so dass die Reißfestigkeit durch die scharfkantig Ausbildung weiter reduziert werden kann.

Zwischen dem Steg und den Dichtbereichen sind Übergangsbereiche angeordnet, die bevorzugt jeweils gerundet ausgebildet sind. Die Übergangsbereiche können jeweils die Form eines Freistichs aufweisen. Eine solche Ausgestaltung bedingt, dass in diesem Bereich die Kerbspannungen auf ein Minimum reduziert sind; die Reißfestigkeit in diesem Bereich ist dadurch vergleichsweise hoch. Tritt der Überlastfall bei einem derart gestalteten Dichtring auf, reißt der Steg in jedem Fall außerhalb der Übergangsbereiche, zum Beispiel etwa mittig seiner Umfangserstreckung, weil die Übergangsbereiche eine demgegenüber deutlich größere Reißfestigkeit aufweisen.

Der Steg kann radial außen- oder innenseitig des Dichtrings angeordnet sein und denselben Außen- oder Innendurchmesser aufweisen, wie die in Umfangsrichtung beiderseits angrenzenden Dichtbereiche. Während des Betriebs der Maschine mit Drücken innerhalb des abzudichtenden Raums, die unterhalb eines Grenzwertes liegen, ist die Dichtwirkung des Dichtrings genauso gut, wie bei Dichtringen, die den zuvor beschriebenen Überlastschutz nicht aufweisen.

Der Steg kann, im Längsschnitt des Dichtrings betrachtet, im Wesentlichen Ωförmig ausgebildet sein. Durch die Einschnürung des Stegs im Bereich seiner Basis ist dieser in axialer Richtung besonders nachgiebig. Durch die auch hier freistichartige Ausgestaltung und die daraus resultierenden nur geringen Kerbwirkungen, weist der Dichtring eine gute Dauerhaltbarkeit auf. Eine Materialermüdung durch wechselnde Belastungen der Basis des Stegs ist dadurch minimiert.

Der Dichtungswerkstoff ist bevorzugt Polyamid. Das Polyamid kann gefüllt oder ungefüllt sein. Insbesondere kann auch Polyamid mit Glas- oder Kohlefasern zur Anwendung gelangen. Für die Verwendung des Dichtrings, insbesondere als Kolben- oder Stangendichtung, ist ein solcher Werkstoff gut geeignet.

Verwendet wird der Dichtring als Kolben- oder Stangendichtung. Kolben- oder Stangendichtungen gelangen häufig in Maschinen zur Anwendung, in denen unerwünscht große Druckschwankungen/hohe Druckspritzen auftreten, die empfindlich auf unzulässig große Druckschwankungen/hohe Druckspritzen reagieren und/oder bei denen die Baubäume für die zur Anwendung gelangenden Dichtsysteme in ihrer Größe stark begrenzt sind. Der erfindungsgemäße Dichtring ist gerade deshalb für eine solche Verwendung prädestiniert.

### Kurzbeschreibung der Zeichnung

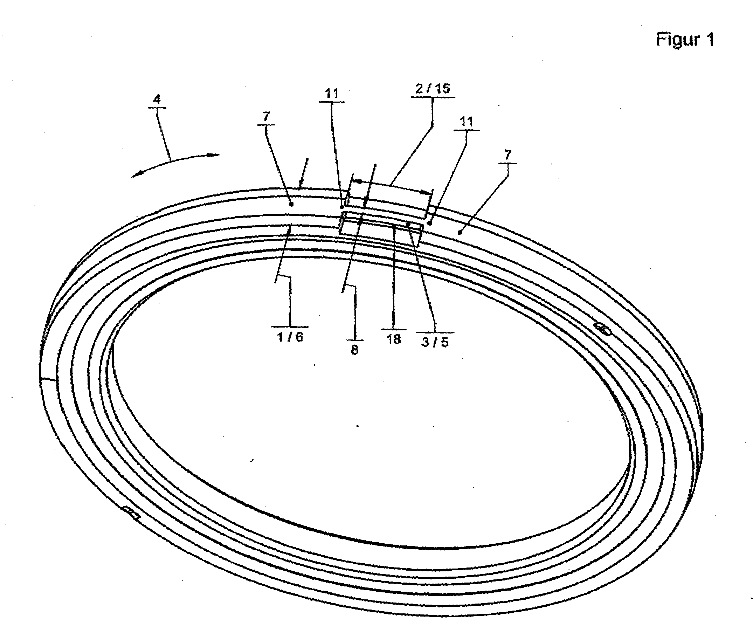

Vier Ausführungsbeispiele des erfindungsgemäßen Dichtrings werden nachfolgend anhand der Figuren 1 bis 15 näher erläutert. Diese zeigen jeweils in schematischer Darstellung:

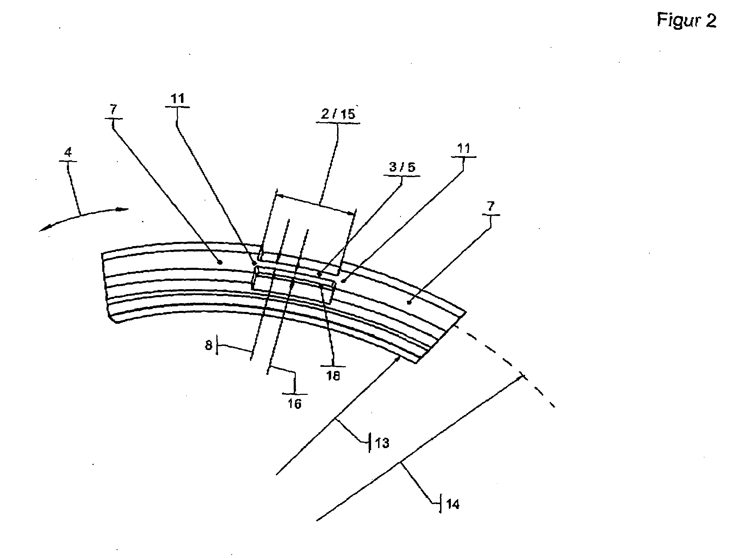

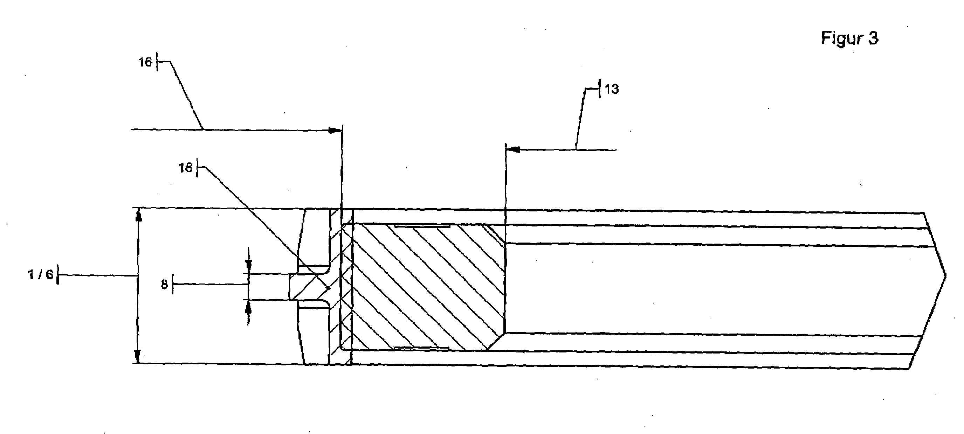

Figuren 1 bis 3 ein erstes Ausführungsbeispiel, wobei in Figur 1 der Dichtring perspektivisch gezeigt ist, in Figur 2 ein vergrößerter Ausschnitt aus Figur 1 dargestellt ist und Figur 3 einen Ausschnitt aus einem Längsschnitt durch den Dichtring zeigt.

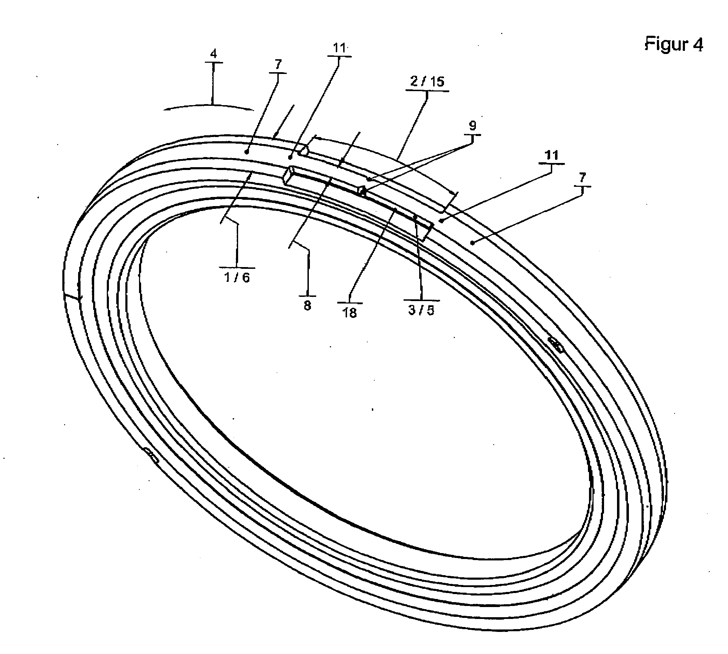

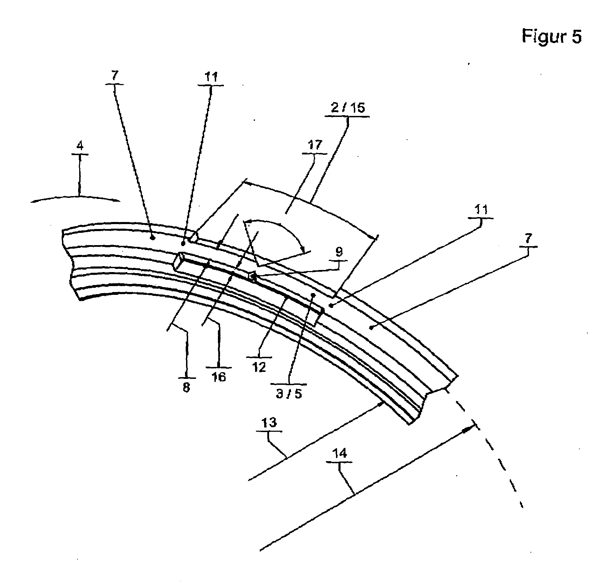

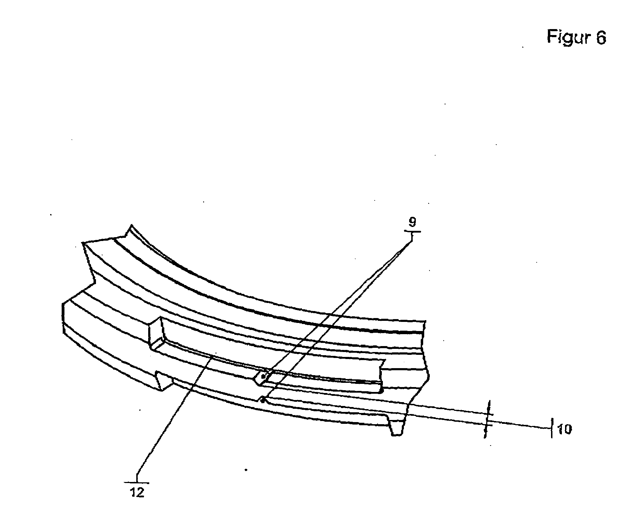

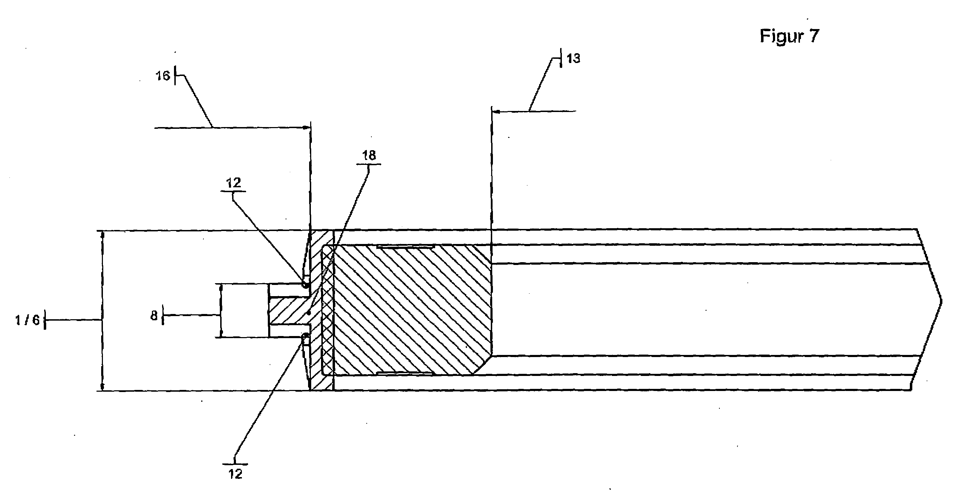

Figuren 4 bis 7 ein zweites Ausführungsbeispiel, wobei in Figur 4 der Dichtring perspektivisch gezeigt ist, in Figur 5 ein vergrößerter Ausschnitt aus Figur 4 dargestellt ist, Figur 6 den vergrößerten Ausschnitt aus Figur 5 um 90° gekippt zeigt und in Figur 7 ein Ausschnitt aus einem Längsschnitt durch den Dichtring zu sehen ist.

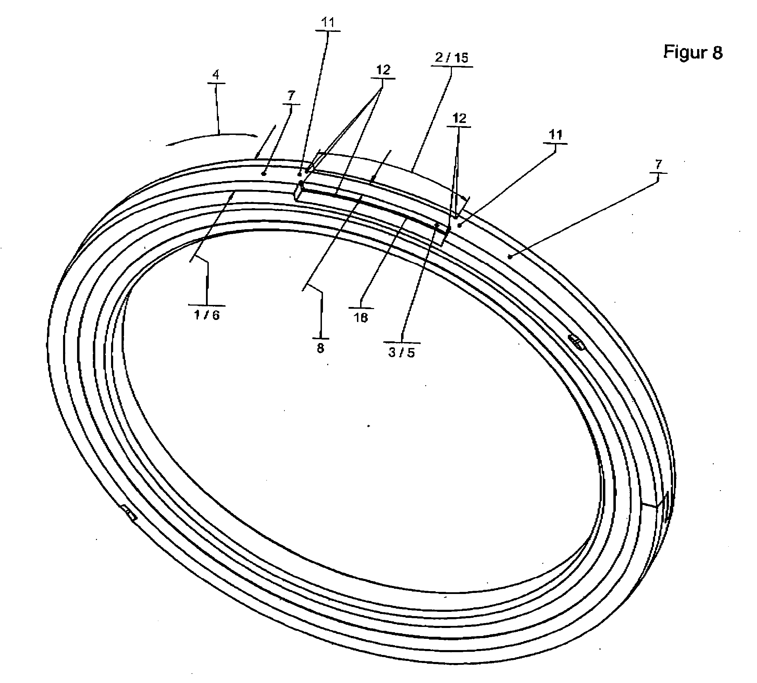

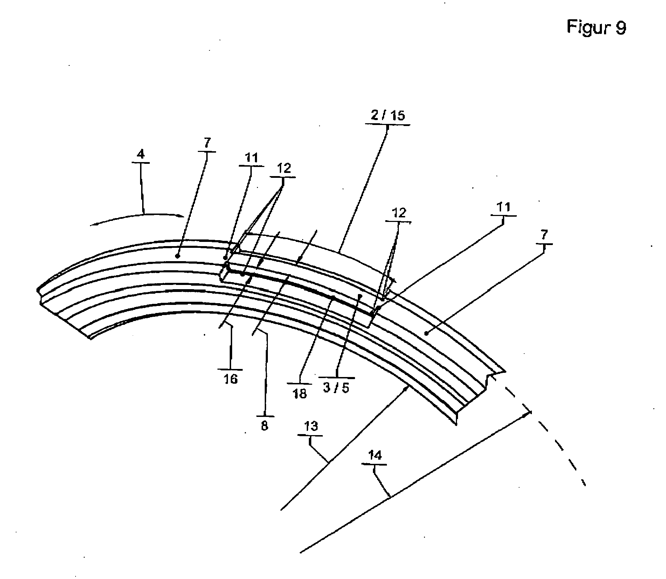

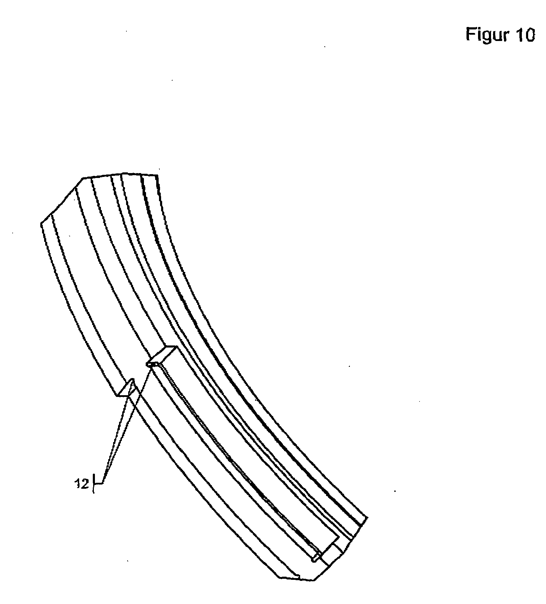

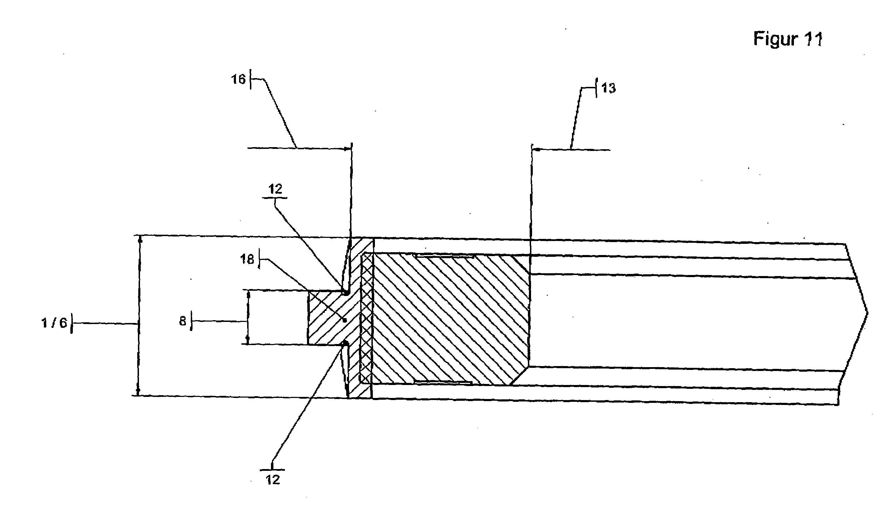

Figuren 8 bis 11 ein drittes Ausführungsbeispiel, wobei in Figur 8 der Dichtring perspektivisch gezeigt ist, in Figur 9 ein vergrößerter Ausschnitt aus Figur 8 dargestellt ist, Figur 10 den vergrößerten Ausschnitt aus Figur 9 um 90° gekippt zeigt und in Figur 11 ein Ausschnitt aus einem Längsschnitt durch den Dichtring zu sehen ist.

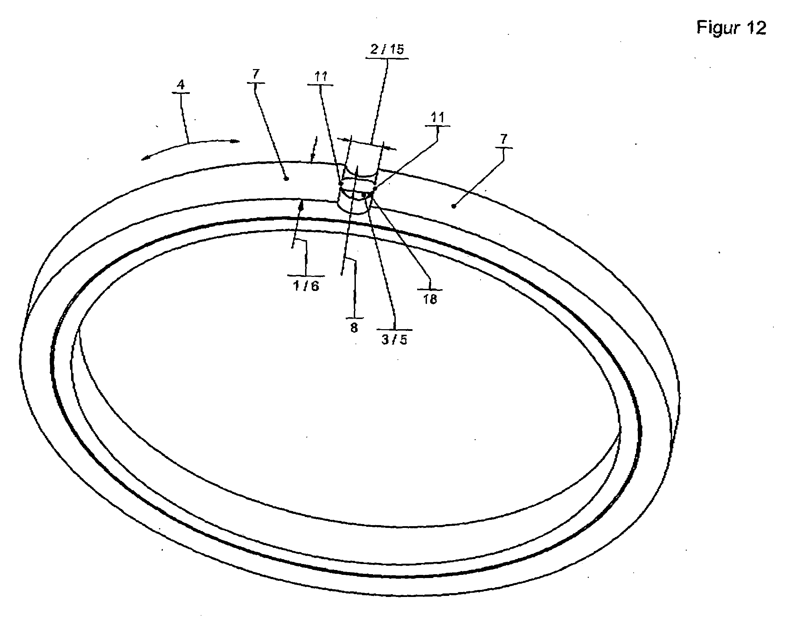

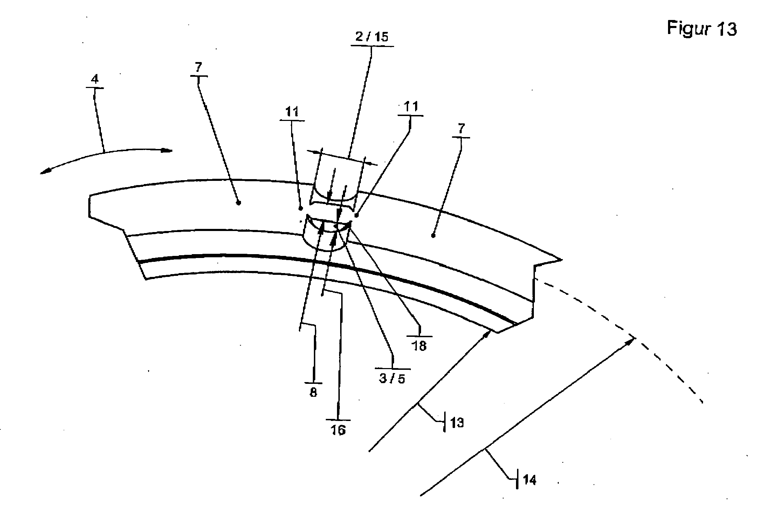

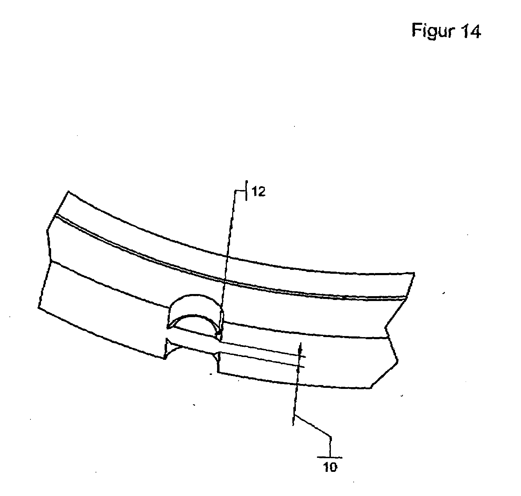

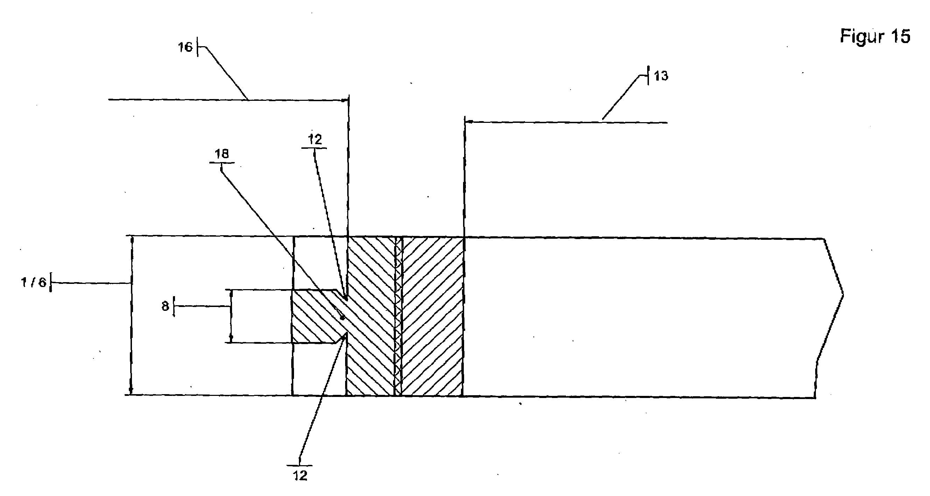

Figuren 12 bis 15 ein viertes Ausführungsbeispiel, wobei in Figur 12 der Dichtring perspektivisch gezeigt ist, in Figur 13 vergrößerter Ausschnitt aus Figur 12 dargestellt ist, Figur 14 den vergrößerten Ausschnitt aus Figur 13 um 90° gekippt zeigt und in Figur 15 ein Ausschnitt aus einem Längsschnitt durch den Dichtring zu sehen ist.

### Ausführung der Erfindung

In den vier Ausführungsbeispielen gemäß Figuren 1 bis 15 ist jeweils ein Dichtring aus einem elastisch nachgiebigen Dichtungswerkstoff, hier Polyamid, gezeigt, dessen Breite 1 im Umfangsbereich 2 reduziert und dieser Umfangsbereich 2 als Sollbruchstelle 3 ausgebildet ist.
In den Figuren 1 bis 11 ist der Steg 5, in einer Seitenansicht des Dichtrings betrachtet, im Wesentlichen rechteckförmig, in den Figuren 12 bis 15 im Wesentlichen halbkreisförmig ausgebildet. Der Umfangsbereich 2 weist eine Erstreckung 15 in Umfangsrichtung 4 auf, die 3 bis 7 mal, im gezeigten Ausführungsbeispiel 5 mal größer ist, als die radiale Tiefe 16 des Stegs 5. Die axiale Breite 8 des Stegs 5 entspricht im wesentlichen seiner radialen Tiefe 16. Das Verhältnis aus der Breite 6 der Dichtbereiche 7 zur Breite 8 des Stegs 5 beträgt in den hier dargestellten Ausführungsbeispielen etwa fünf.
Dadurch werden einerseits gute Gebrauchseigenschaften des Dichtrings mit integriertem Überlastschutz gewährleistet, und andererseits sind solche Dichtringe prozesssicher, einfach und kostengünstig herstellbar.
Der Steg 5 bildet die Sollbruchstelle 3 des Dichtrings und ist axial mittig des Dichtrings angeordnet.

Die in den Figuren 1 bis 11 dargestellten Dichtringe gelangen jeweils als Kolbendichtung zur Anwendung.

In den Figuren 1 bis 3 ist ein erstes Ausführungsbeispiel eines Dichtrings gezeigt. In Figur 1 ist der Dichtring perspektivisch gezeigt, in Figur 2 ist ein vergrößerter Ausschnitt aus Figur 1 dargestellt ist und Figur 3 zeigt einen Längsschnitt durch den Dichtring.
Die Sollbruchstelle 3 wird durch den Steg 5 gebildet, der sich in Umfangsrichtung 4 über den Umfangsbereich 2 erstreckt. Die Übergangsbereiche 11 zwischen dem Steg 5 und den Dichtbereichen 7, die in Umfangsrichtung 4 beiderseits an den Steg 5 angrenzen, sind jeweils gerundete ausgebildet. Während der bestimmungsgemäßen Verwendung sind Kerbspannungen in diesem Bereich deshalb reduziert.

In den Figuren 4 bis 7 ist ein zweites Ausführungsbeispiel eines Dichtrings gezeigt. In Figur 4 ist der Dichtring perspektivisch gezeigt, in Figur 5 ist ein vergrößerter Ausschnitt aus Figur 4 dargestellt, Figur 6 zeigt den vergrößerten Ausschnitt aus Figur 5 um 90° gekippt und in Figur 7 ist ein Längsschnitt durch den Dichtring zu sehen.
Im Gegensatz zum ersten Ausführungsbeispiel weist der Steg 5 entlang seiner Umfangserstreckung, in Umfangsrichtung 4 betrachtet, eine mittige Einkerbung 9 auf, deren Breite 10 im Vergleich zur Breite 8 des umfangsseitig beiderseits angrenzenden Stegs 5 weiter verringert ist. Die Einkerbung 9 begrenzt einen Winkel 17 von 90°, wobei die Einkerbung 9 symmetrisch zur axial mittigen Breite 1 des Dichtrings angeordnet ist.

In den Figuren 8 bis 11 ist ein drittes Ausführungsbeispiel des Dichtrings gezeigt. In Figur 8 ist der Dichtring perspektivisch gezeigt, in Figur 9 ist ein vergrößerter Ausschnitt aus Figur 8 dargestellt, Figur 10 zeigt den vergrößerten Ausschnitt aus Figur 9 um 90° gekippt, und in Figur 11 ist ein Längsschnitt durch den Dichtring zu sehen.

Im Gegensatz zu den beiden zuvor beschriebenen Ausführungsbeispielen sind die Übergangsbereiche 11 zwischen dem Steg 5 und den Dichtbereichen 7 nicht nur jeweils gerundete ausgebildet. Die Übergangsbereiche 11 weisen außerdem jeweils die Form eines Freistichs auf, um Kerbspannungen in diesem Bereich auf ein Minimum zu reduzieren.
In Figur 11 ist besonders gut zu erkennen, dass der Steg 5, im Längsschnitt des Dichtrings betrachtet, im Wesentlichen Ω-förmig ausgebildet ist. Auch die Basis 18 des Stegs 5 ist dadurch praktisch keinen die Gebrauchsdauer verringernden Kerbspannungen während der bestimmungsgemäßen Verwendung des Dichtrings ausgesetzt.

In den Figuren 12 bis 15 ist ein viertes Ausführungsbeispiel des Dichtrings gezeigt. In Figur 12 ist der Dichtring perspektivisch gezeigt, in Figur 13 ist ein vergrößerter Ausschnitt aus Figur 12 dargestellt, Figur 14 zeigt den vergrößerten Ausschnitt aus Figur 13 um 90° gekippt, und in Figur 15 ist ein Längsschnitt durch den Dichtring zu sehen. Die Übergangsbereiche 11 weisen die Form eines Freistichs auf, um Kerbspannungen in diesem Bereich auf ein Minimum zu reduzieren. Durch diesen Freistich entsteht, im Längsschnitt des Dichtrings betrachtet, eine im Wesentlichen Ω förmige Gestalt, so dass auch in der Basis 18 des Stegs 5

Als scharfkantig werden in der vorliegenden Anmeldung Übergänge bezeichnet, deren Radius höchstens 0,2 mm beträgt. Demgegenüber werden Übergänge als gerundet bezeichnet, deren Radius wenigstens 0,5 mm beträgt.

Die Sollbruchstellen 3 der dargestellten Dichtringe werden durch die Stege 5 gebildet. Die Stege 5 bilden einen Überlastschutz und reißen, sobald der Differenzdruck, der axial am Steg 5 anliegt, einen vorher bestimmten Crenzwert/Berstdruck überschritten hat. Würde bei Überschreitung des GrenzwertsBerstdrucks der Steg 5 nicht reißen und somit als Überlastschutz fungieren, bestünde die Gefahr, dass die Maschine, in der der Dichtring zur Anwendung gelangt, durch den unerwünscht hohen Überdruck beschädigt/zerstört wird.
Der erfindungsgemäße Dichtring mit integriertem Überlastschutz ist einfach und kostengünstig herstellbar und in seiner Wirkung sehr effizient. Auch besteht die Möglichkeit, den Dichtring mit integriertem Überlastschutz in Maschinen vorzusehen, bei denen ein solcher Überlastschutz bisher nicht vorhanden war. Dazu ist es lediglich erforderlich, den bisherigen Dichtring durch den erfindungsgemäßen Dichtring zu ersetzen; weitere Veränderungen müssen nicht vorgenommen werden, was in wirtschaftlicher Hinsicht von hervorzuhebendem Vorteil ist.

## Patentansprüche

1. Dichtring aus einem elastisch nachgiebigen Dichtungswerkstoff mit einer sich in axialer Richtung erstreckenden Breite (1), wobei die Breite (1) in zumindest einem Umfangsbereich (2) reduziert ist und dieser Umfangsbereich (2) als Sollbruchstelle (3) ausgebildet ist.

2. Dichtring nach Anspruch 1, **dadurch gekennzeichnet, dass** die Sollbruchstelle (3) als sich in Umfangsrichtung (4) erstreckender Steg (5) ausgebildet ist.

3. Dichtring nach einem der Ansprüche 1 oder 2, **dadurch gekennzeichnet, dass** der Steg (5), in Umfangsrichtung des Dichtrings betrachtet, im Wesentlichen rechteckförmig ausgebildet ist.

4. Dichtring nach einem der Ansprüche 1 oder 2, **dadurch gekennzeichnet, dass** der Steg (5), in Umfangsrichtung des Dichtrings betrachtet, im Wesentlichen halbkreisförmig ausgebildet ist.

5. Dichtring nach einem der Ansprüche 1 bis 4, **dadurch gekennzeichnet, dass** der Steg (5) axial mittig des Dichtrings angeordnet ist.

6. Dichtring nach einem der Ansprüche 1 bis 5, **dadurch gekennzeichnet, dass** das Verhältnis aus der Breite (6) der Dichtbereiche (7), die in Umfangsrichtung (4) beiderseits an den Steg (5) angrenzen, zur Breite (8) des Stegs (5) 2 bis 10 beträgt.

7. Dichtring nach Anspruch 6, **dadurch gekennzeichnet, dass** das Verhältnis 3,5 bis 6 beträgt.

8. Dichtring nach einem der Ansprüche 1 bis 7, **dadurch gekennzeichnet, dass** der Steg (5) entlang seiner Umfangserstreckung zumindest eine Einkerbung (9) aufweist, deren Breite (10) im Vergleich zur Breite (8) des umfangsseitig beiderseits angrenzenden Stegs (5), weiter verringert ist.

9. Dichtring nach Anspruch 8, **dadurch gekennzeichnet, dass** die Einkerbung (9) scharfkantig ausgebildet ist.

10. Dichtring nach einem der Ansprüche 2 bis 9, **dadurch gekennzeichnet, dass** zwischen dem Steg (5) und den Dichtbereichen (7) Übergangsbereiche (11) angeordnet sind, die jeweils gerundet ausgebildet sind.

11. Dichtring nach Anspruch 10, **dadurch gekennzeichnet, dass** die Übergangsbereiche (11) jeweils die Form eines Freistichs (12) aufweisen.

12. Dichtring nach einem der Ansprüche 1 bis 11, **dadurch gekennzeichnet, dass** der Steg (5) radial außen- oder innenseitig des Dichtrings angeordnet ist und denselben Außen- (13) oder Innendurchmesser (14) aufweist, wie die in Umfangsrichtung (4) beiderseits angrenzenden Dichtbereiche(7).

13. Dichtring nach einem der Ansprüche 1 bis 12, **dadurch gekennzeichnet, dass** der Steg (5), im Längsschnitt des Dichtrings betrachtet, im wesentlichen Ω-förmig ausgebildet ist.

14. Dichtring nach einem der Ansprüche 1 bis 13, **dadurch gekennzeichnet, dass** der Dichtungswerkstoff Polyamid ist.

15. Verwendung eines Dichtrings nach einem der vorangegangenen Ansprüche als Kolben- oder Stangendichtung.

## Geänderte Patentansprüche

### Geänderte Patentansprüche gemäss Regel 137(2) EPÜ.

**1.** Dichtring aus einem elastisch nachgiebigen Dichtungswerkstoff mit einer sich in axialer Richtung erstreckenden Breite (1), wobei die Breite (1) in zumindest einem Umfangsbereich (2) reduziert ist und dieser Umfangsbereich (2) als Sollbruchstelle (3) ausgebildet ist, **dadurch gekennzeichnet, dass** die Sollbruchstelle (3) als sich in Umfangsrichtung (4) erstreckender Steg (5) ausgebildet ist, dass in Umfangsrichtung (4) an den Steg (5) jeweils Dichtbereiche (7) angrenzen, dass der Steg (5) radial außen- oder innenseitig des Dichtrings angeordnet ist und denselben Außen- (13) oder Innendurchmesser (14) aufweist, wie die in Umfangsrichtung (4) beiderseits angrenzenden Dichtbereiche (7) und dass das Verhältnis aus der Breite (6) der Dichtbereiche (7), die in Umfangsrichtung (4) beiderseits an den Steg (5) angrenzen, zur Breite (8) des Stegs (5) 2 bis 10 beträgt.

**2.** Dichtring nach Anspruch 1, **dadurch gekennzeichnet, dass** das Verhältnis 3,5 bis 6 beträgt.

**3.** Dichtring nach einem der Ansprüche 1 oder 2, **dadurch gekennzeichnet, dass** der Steg (5), in einer Seitenansicht des Dichtrings betrachtet, im Wesentlichen rechteckförmig ausgebildet ist.

**4.** Dichtring nach einem der Ansprüche 1 oder 2, **dadurch gekennzeichnet, dass** der Steg (5), in einer Seitenansicht des Dichtrings betrachtet, im Wesentlichen halbkreisförmig ausgebildet ist.

**5.** Dichtring nach einem der Ansprüche 1 bis 4, **dadurch gekennzeichnet, dass** der Steg (5) axial mittig des Dichtrings angeordnet ist.

**6.** Dichtring nach einem der Ansprüche 1 bis 5, **dadurch gekennzeichnet, dass** der Steg (5) entlang seiner Umfangserstreckung zumindest eine Einkerbung (9) aufweist, deren Breite (10) im Vergleich zur Breite (8) des umfangsseitig beiderseits angrenzenden Stegs (5), weiter verringert ist.

**7.** Dichtring nach Anspruch 6, **dadurch gekennzeichnet, dass** die Einkerbung (9) scharfkantig ausgebildet ist.

**8.** Dichtring nach einem der Ansprüche 1 bis 7, **dadurch gekennzeichnet, dass** zwischen dem Steg (5) und den Dichtbereichen (7) Übergangsbereiche (11) angeordnet sind, die jeweils gerundet ausgebildet sind.

**9.** Dichtring nach Anspruch 8, **dadurch gekennzeichnet, dass** die Übergangsbereiche (11) jeweils die Form eines Freistichs (12) aufweisen.

**10.** Dichtring nach einem der Ansprüche 1 bis 9, **dadurch gekennzeichnet, dass** der Steg (5), im Längsschnitt des Dichtrings betrachtet, im wesentlichen Ω-förmig ausgebildet ist.

**11.** Dichtring nach einem der Ansprüche 1 bis 10, **dadurch gekennzeichnet, dass** der Dichtungswerkstoff Polyamid ist.

**12.** Verwendung eines Dichtrings nach einem der vorangegangenen Ansprüche als Kolben- oder Stangendichtung.
